# EUROPEAN PATENT APPLICATION

(11) **EP 0 669 739 A2**
(43) Date of publication of application: **30.08.1995**
(21) Application number: 95102609.5
(22) Date of filing: 24.02.1995
(51) Int. Cl.: H04L 25/06

(54) **Direct current level acquisition circuit**

(30) Priority: 28.02.1994 ES 9400399
(71) Applicant: ALCATEL STANDARD ELECTRICA, S.A., E-28045 Madrid (ES)
(72) Inventor: Diez Kowalski, Emilio, E-28028 Madrid (ES); Hernandez Blanco, Carlos, E-28029 Madrid (ES); Merino Gonzales, Jose Luis, Mondejar P. 1410, E-19174 Torrejon del Rey (Guadalajara) (ES); Ortiz Saenz, Fernando, E-28006 Madrid (ES); Martinez Garcia, Francisco Javier, E-28017 Madrid (ES)
(74) Representative: Pohl, Herbert, Dipl.-Ing

(57) **Abstract**

Of particular application in burst communications systems that require a rapid acquisition of the direct current component level, the bursts comprising a header with a determined sequence.

It includes two lowpass filters (FIL1,FIL2) with different bandwidths, which receive an input signal (RX_DAT) and the outputs of which are applied to selection means (SEL) which dynamically selects one of the preceding signals from the lowpass filters (FIL1,FIL2) as the direct current component (DC O) of the input signal (RX_DAT), the latter being the signal coming from the second lowpass filter (FIL2), with the greater bandwidth, during the burst header and that coming from the first lowpass filter (FIL1) or from the second lowpass filter (FIL2), sampled, for the rest of the burst.

This direct current component signal (DC_O) is applied to a comparator (COMP), which also receives the input signal (RX DAT), in order to obtain the regenerated output data signal (DAT O).

## Description

### FIELD OF APPLICATION

This invention refers to a system that compensates the direct current level that appears at the output of a frequency demodulator employed in the receiver of a burst digital radio communications equipment whereby it is possible to establish a decision level for the output signal of this frequency modulator that permits a correct recovery of the digital data.

It is of special application in burst communications systems that require rapid acquisition of this direct current level in order to permit the regeneration of the digital data as soon as it is possible, avoiding the loss of information that impedes bit or burst synchronisation of the receivers.

### STATE OF THE ART

The use of frequency demodulators in the receivers of equipments employed in burst digital radio communication systems, with constant amplitude modulation, is very widespread because of its independence, within a broad operating range, of the level of the input signal to these modulators. This means that it is not necessary to have automatic gain control in order to obtain an input signal to the demodulator with a constant level and which would require a certain time that would reduce the effectiveness of the system in terms of useful information bits per total number of transmitted bits.

As a consequence of the small, undesired shifts in frequency due to imprecisions in the oscillators in the transmit and receive branches, and in the actual discriminator employed in the frequency demodulator, the demodulated signal appears, at the output of the latter, with a direct current component which causes the optimum decision threshold that has to be used for the regeneration of the data to be initially unknown since it depends on the direct current component mentioned.

To overcome this problem, there are, according to the state of the art, various procedures that permit the compensation of this undesired direct current component in order to establish an optimum decision threshold as can be seen in the Spanish patent P9003329. This patent mentions, in turn, as the state of the art, the use of lowpass RC filters to obtain the direct current component of the demodulated signal. Nevertheless, this procedure proves unacceptable in certain burst systems in which the need to recover synchronisation during the header obliges the use of small time constants and simultaneously, the appearance of identical consecutive bit streams requires the use of a long time constant.

The solution proposed in the patent mentioned is based on sampling the discriminator output signal a certain number of times per bit. This sampled signal is also delayed by one bit period in order to subsequently obtain two new signals that are the half-sum of the sampled signal and its delayed signal and the modulus of the difference of these same two signals.

When a data transition takes place, from one to zero or vice versa, the half-sum of the two signals indicates the reference value of the demodulated signal or, what is the same thing, the direct current level of this signal. This situation arises when the second signal, that is the modulus of the difference between sampled and delayed signals, reaches a high value.

To prevent the noise from giving a false value of the decision threshold, what is done is to increase or decrease the previous threshold slightly so that an isolated error does not completely impair the optimum decision threshold, but only worsens it a little such that in the ensuing transition this error can be cancelled.

This solution, although intended to resolve the problem of the variable direct current level in this kind of demodulator, presents the inconvenience of needing to use an analogue-to-digital converter requiring a high power consumption, especially when the converter required is of the fast-acting type. This inconvenience means that this solution is not applicable in cordless terminals that require high battery autonomy.

### TECHNICAL PROBLEM TO BE OVERCOME

As a result of all the foregoing, the technical problem to be overcome resides in how to perform, quickly, the correction or compensation of the undesired direct current level that appears at the output of the frequency demodulators in burst digital communications systems. This correction has to be implementable with a low current consumption that does not appreciably affect the total power consumption of the equipment incorporating the frequency demodulator.

### CHARACTERISATION OF THE INVENTION

The circuit according to the invention, for use in burst digital communications receivers in which each burst comprises a known header used for acquisition of synchronisation, is characterised in that it comprises a first and a second lowpass filter that receive the input signal and the bandwidths of which are different, the outputs of both filters being applied to selection means whose output, which is the direct current component of the input signal, is that coming from the second lowpass filter, with a greater bandwidth, during the burst header, and for the rest of the burst that coming from the first lowpass filter or from the second lowpass filter, sampled.

Subsequently this direct current component is applied to one of the inputs of a comparator which receives, through another of its inputs, the previously filtered input signal and which obtains, by comparison, the output data signal.

In addition, in order to avoid fluctuations in this value of direct current component, sampling is done of the value of the output signal from the first lowpass filter, with a lesser bandwidth, in the last bit of the header, so that this value is maintained until the end of the burst.

These lowpass filters, in the most simplified version possible, are each formed by a resistor and a capacitor and, to select the output of the filter corresponding at each moment according to the actual instant of the process, controlled analogue switches are employed each operated by control signals coming from a control circuit, which open or close the switches in question.

Finally, the circuit of the invention also includes a sample-and-hold circuit which samples and holds the value of the output signal from the second lowpass filter, with a greater bandwidth, when a determined bit sequence is detected during the burst header until this sequence reappears, at which point the sample-and-hold process is repeated.

With the application of the circuit of the invention, it is possible to effect quickly, simply and with little current consumption ° , the acquisition of the level of the direct current component of a burst digital signal in order to permit the regeneration of the received data by means of comparing them with a reference threshold that is the centre value of this signal. These bursts include, at the beginning, a known header that is mainly used for the purpose of frame and data clock synchronisation and the loss of which would result in the loss of the information sent in the burst corresponding.

### BRIEF FOOTNOTES TO THE FIGURES

A fuller explanation of the invention can be found in the following description of an implementation of the invention based on the figures attached, in which:
- figure 1 is a general block diagram in accordance with the invention,
- figure 2 shows the schematic of a direct current level acquisition circuit in a recommended implementation according to the invention, and
- figure 3 shows the evolution with time of different signals in the circuit mentioned.

### DESCRIPTION OF AN IMPLEMENTATION OF

### THE INVENTION

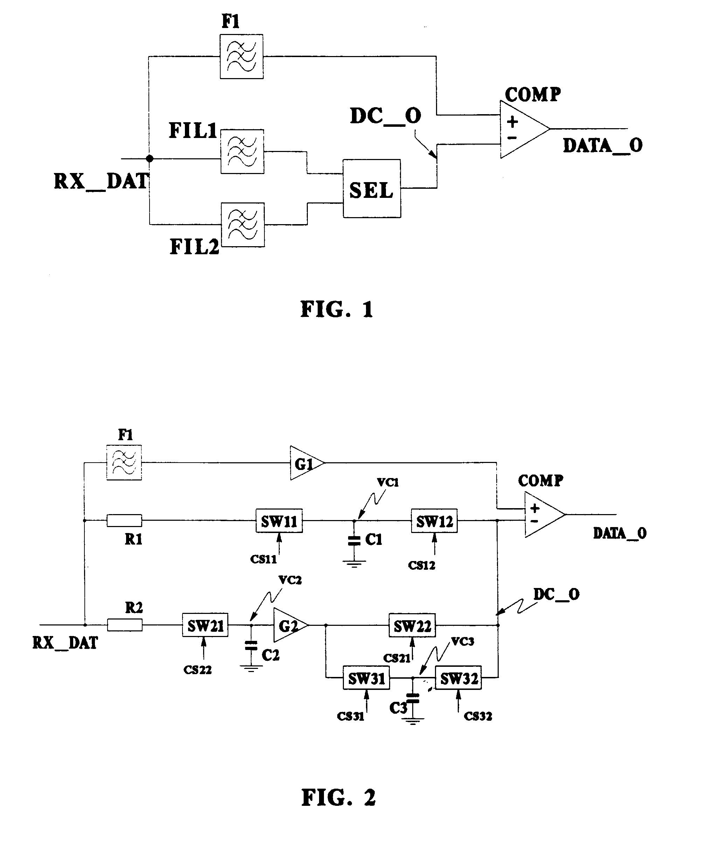

The circuit of figure 1 is a general representation of the data receiver part of the kind used in a cordless communications system that serves to regenerate the data obtained from the frequency demodulation of a signal received by radio. For this, it compares the input signal RX_DAT with a reference signal DC O that is determined from the direct current component of this signal, whereby at the output of a comparator COMP the digital values "1" or "0" of the output data signal DATA O are determined as a function of whether the input signal is greater than or less than this reference signal.

To this end, there are two lowpass filters FiLl and FIL2 with different bandwidths, one small and the other large in comparison with the bandwidth of the input signal RX_DAT (about ten times smaller than this in one case and of approximately the same order in the second case), and whose outputs are applied to the comparator COMP through selector means SEL which receive both output signals coming from these filters and selects one of them during a certain time period and the other during the rest of the time until the complete duration of the burst has elapsed.

In one preferred implementation of this invention, as is shown in figure 2, the input signal RX_DAT, which has been previously passed through a post-detection filter F1 and a low-gain amplifier G1 that compensates for the loss produced in the preceding filter, is compared with a determined reference signal DC_O such that when the input signal RX_DAT is greater than this reference, a high output level is produced and when it is below this reference, the output value is low.

There is a determined optimum value for the reference signal DC_O that produces a greater level of protection with respect to noise and, consequently, a lesser probability of error. This value is situated at the mean level of the maximum and minimum swings of the input signal RX_DAT and is equivalent to the value of the direct current component of this input signal when the number of "ones" and "zeros" is the same.

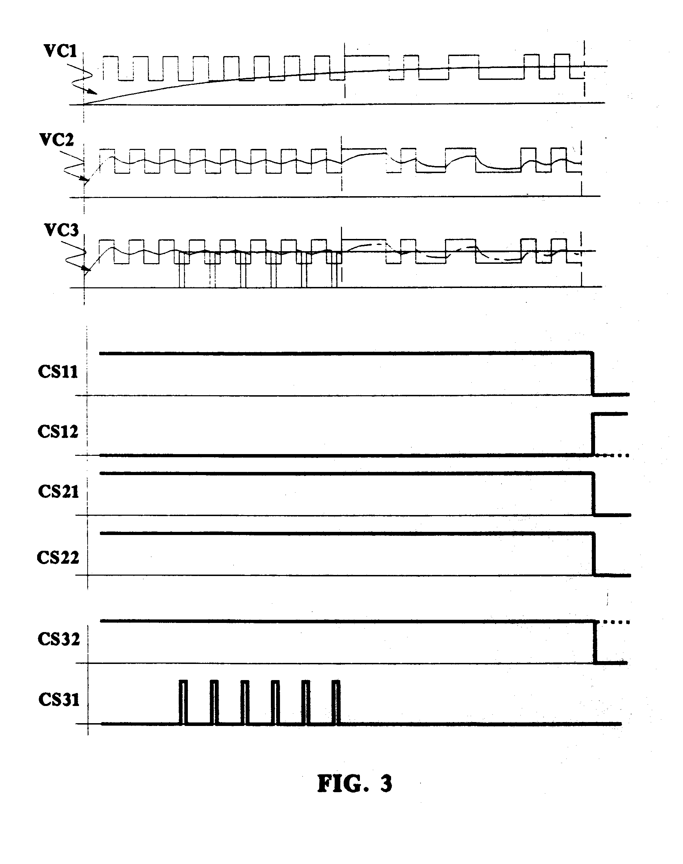

To obtain this direct current component independently of the input data (assuming the number of "ones" and "zeros" to be approximately the same), use is made of the narrow-bandwidth lowpass filter formed by the resistor R1 and the capacitor C1 and which has a time constant that is about ten times that of a bit period. The output signal VC1 from this filter evolves slowly, in comparison with the data signal, towards the direct current component value as can be seen in figure 3. This means that the data would not start to be recovered correctly until a bit located fairly late, it not therefore being possible to recover the data clock during the preceding period.

For this reason there is another lowpass filter with a much broader bandwidth formed by the resistor R2 and the capacitor C2, the time constant of which is approximately that of the bit period and whose output signal VC2, which develops more quickly, is able to approach the value of the direct current component of the input signal RX_DAT in a very short time when compared to the bit period, as is also shown in figure 3. This approximation to the direct current component however differs considerably from the true value when there are sequences with some bits having the same value and therefore the use of this filter is not acceptable when the information being sent is unknown since it is not possible to estimate the closeness of the direct current component to the true value.

Thus in this implementation according to the invention what is used is a temporary combination of both filters. To achieve this, by the use of analogue switches SW11,SW12,SW21,SW22 the signals obtained from each of the filters are directed to one of the inputs of the comparator which regenerates the binary data according to a strategy that optimises the receiver response. That is, in the initial stage in which the burst header is received and which has a known value (AAAAE98A in hexadecimal form when the base transmits and 55551675 when the terminal transmits), use is made of the filtered signal coming from the lowpass filter with the wide bandwidth, R2 C2, which permits the direct current component level to be rapidly acquired with some fluctuations which, in this case with these headers, are perfectly acceptable, as can be seen from the curves shown in figure 3. This is achieved in practice by having the analogue switches SW21 and SW22 in the closed position, the first of these permitting the capacitor C2 to charge and the second allowing the filter output signal VC2 to pass first to a high input impedance unit gain amplifier G2 and then to one of the inputs of the comparator COMP which regenerates the output data signal DAT - 0, thus obtaining the data corresponding to the burst header. At the same time, the switch SW11 is closed and the switch SW12 opened, so that although the output signal from the narrow bandwidth filter formed by R1 and C1 evolves towards the mean value as shown by the curve VC1 of figure 3, this output signal does not reach the comparator COMP.

The bits regenerated during these moments are applied to a burst synchronisation circuit (not shown) that detects the synchronising word in order to act on these analogue switches so that the switch SW11 is opened in order to maintain constant the value of the direct current component obtained from the narrow-bandwidth lowpass filter, R1 C1, and the switch SW12 is closed during the rest of the burst, permitting this value of direct current component to be present at the inverting input of the comparator COMP. Simultaneously the switches SW21 and SW22 are opened so that the ouptut from the broad-bandwidth lowpass filter, R2 C2, does not affect that coming from the other filter.

From this moment, the reference signal value used by the comparator COMP to regenerate the received data is kept practically fixed at the optimum value, meaning that the probability of error is minimal.

There is also a sample-and-hold circuit formed by the analogue switches SW31 and SW32 and the capacitor C3, which permits an additional operating mode.

In this respect, when a determined bit chain is detected in the header, in this case 101010, in which the direct current component is approximately the optimum comparison value, the analogue switch SW31 is closed for a short interval of time to sample the voltage value during this interval and thereafter maintain it until the next time this sequence appears. SW32 always remains open during this header.

In this mode, SW11 operates exactly the same as before for the entire burst, while SW12 always remains open during the burst header and then is open or closed for the rest of the burst depending on whether determined conditions are satisfied in the sample-and-hold circuit formed by SW31, SW32 and C3 as is subsequently explained.

After each appearance of the sequence 101010 in the burst header, a count is initiated of the number of bits that pass so that, in the absence of errors, this count should reach 16 at the end of the header because of the header's actual composition. If, in addition, the second bit in this sequence is not erroneous, that is in this case a "1" " is received, then the switch SW32 is closed, while SW12 remains open. This configuration guides the sampled signal present on capacitor C3 to the inverting input of the comparator COMP.

## Claims

1. DIRECT CURRENT LEVEL ACQUISITION CIRCUIT in burst digital communications receivers in which each burst comprises a header used for acquiring synchronisation, the content of which is known, characterised in that it comprises a first and second lowpass filter (FIL1,FIL2) which receive the input signal (RX_DAT), the bandwidths of which are different and the outputs of which are sent to selection means (SEL) whose output, this being the direct current component signal (DC_O) of the input signal (RX_DAT), comes from the second lowpass filter (FIL2), with a greater bandwidth, during the burst header and from the first lowpass filter (FIL1), with a lesser bandwidth, or from the second lowpass filter (FIL2), sampled, for the rest of the burst.

2. CIRCUIT according to claim 1 characterised in that the direct current component signal (DC_O) is sent to one of the inputs of a comparator (COMP) which receives through another of its inputs the input signal (RX DAT) previously filtered and which produces by comparison the output data signal (DAT O).

3. CIRCUIT according to claim 1 characterised in that the direct current component signal from the output of the comparison means (DC_O) for each burst excluding the headers, is the value of the output of the first lowpass filter (FIL1) but sampled in the last bit of the header and maintained during the rest of this burst.

4. CIRCUIT according to claim 1 characterised in that the two lowpass filters (FIL1,FIL2) that respectively perform the lowpass filtering of the input signal (RX_DAT), are two filters formed by a resistor and a capacitor (R1,C1;R2,C2).

5. CIRCUIT according to claim 1 characterised in that the selection means (SEL) are formed by two analogue switches (SW12,SW22) that receive respective control signals (CS12,CS22), coming from a control circuit, in order to open or close them.

6. CIRCUIT according to claim 1 characterised in that the output signal of the second lowpass filter (FIL2) is also applied to a sample-and-hold circuit (SW31, C3, SW32) which samples this signal when a determined bit string is detected, this value being that used for the rest of the burst when at the end of the header a certain number of bits have passed from the last time sampling was done and, in addition, the bit following the one when the last instant of sampling took place is not in error.
